# EUROPEAN PATENT APPLICATION

(11) **EP 4 518 066 A1**
(43) Date of publication of application: **05.03.2025**
(21) Application number: 24150137.8
(22) Date of filing: 03.01.2024
(51) Int. Cl.: H02G 11/00, B60L 53/31

(54) **CHARGER**

(30) Priority: 04.09.2023 KR 20230117292
(71) Applicant: LG Electronics Inc., Yeongdeungpo-gu Seoul 07336 (KR)
(72) Inventor: LEE, Kangsuk, 06772 Seoul (KR); LEE, Myoungku, 06772 Seoul (KR)
(74) Representative: Vossius & Partner Patentanwälte Rechtsanwälte mbB

(57) **Abstract**

The charger according to this embodiment comprises a rail body on which a rail is formed; a guide disposed to slide on the rail and on which the charging cable is suspended; an electromagnet placed on one of the rail body and the guide, and a magnet placed on the other one of the rail body and the guide.

## Description

The present invention relates to a charger.

A charger is a device used to charge a storage battery.

An example of the charger may be an electric vehicle charger that charges a vehicle such as an electric vehicle, and electrical energy is supplied to a battery of the electric vehicle by connecting a charging connector provided at an end of a charging cable to a connection inlet installed in the electric vehicle.

When not in use, the charging cable may be wound or coiled, and it may be used after unwinding the coiled charging cable and withdrawing the charging cable from a dock or holder. Due to a length of a pulled-out charging cable, a portion of a middle portion may touch a floor, and the portion touching the floor may be damaged by repeated use and contact with the ground floor, such as by being worn out or contaminated by contact with contaminants on the floor.

An example of a charger is a charging device for an electric vehicle is disclosed in Korean Patent Publication No. 10-2021-0026907A (published on March 10, 2021), and the charging device for an electric vehicle comprises a charging body; a charging cable connected to the charging body and having a charging connector at an end; a guide frame installed on one side of the charging body and on which a rail guide is formed; first and second roller modules formed to travel along the rail guide of the guide frame; and a mounting bracket that is connected to the first and second roller modules and transported together, and the first and second roller modules travel on the rail guide according to the stopping position of the electric vehicle that needs to be charged, and can move the position of the charging cable.

Another example of a charger is a charging facility for electric vehicles is disclosed in Korean Patent Publication No. 10-2019-0091673A (published on August 7, 2019), and the charging facility for electric vehicles comprises a cable guide unit installed on the ceiling of the car deck where electric vehicles are loaded; a vehicle charging device that charges the driving battery of the electric vehicle while moving back and forth along the cable guide; and a power management device that supplies power to the driving battery. The cable guide part comprises a rail that provides a path along which the running part of the vehicle charging device moves and installed on the ceiling in the length direction of the car deck on which the electric vehicle is arranged in a straight line; and a plurality of guide rings installed to slide along the rail and configured to allow the charging cable of the vehicle charging device to be suspended at regular intervals. The vehicle charging device comprises a charging cable having one end connected to the power management device and a plug at the other end to charge the driving battery; and a traveling part that is movably installed on the cable guide part and moves the charging cable.

A purpose of this embodiment is to provide a charger that can limit random movement of the guide and minimize wear or damage to the charging cable.

A purpose of this embodiment is to provide a charger that minimizes inconvenience that may occur when the charging cable is randomly moved.

A purpose of this embodiment is to provide a charger capable of locking a guide with a simple structure.

One example of the charger according to this embodiment comprises a rail body on which a rail is formed; a guide disposed to slide on the rail and on which the charging cable is suspended; an electromagnet placed on one of the rail body and the guide, and a magnet placed on the other one of the rail body and the guide.

A plurality of rails may be formed on the rail body.

A plurality of guides may be disposed to slide on each of a plurality of rails.

An electromagnet may be disposed on each of the plurality of guides.

Each of the plurality of guides may comprise an overlap area that overlaps another adjacent guide in the longitudinal direction of the guide. Each of the plurality of guides may further comprise a non-overlap area that does not overlap another adjacent guide in the longitudinal direction of the guide.

The guide may comprise a base. The guide may further comprise a supporter formed on a bottom of the base and on which the charging cable is suspended.

The overlap area may be formed in the base. Supporters of the plurality of guides may not overlap each other.

The magnet may comprise an S-pole magnet and an N-pole magnet. The S-pole magnet and the N-pole magnet may be spaced apart from each other on the rail body in a direction perpendicular to the longitudinal direction of the rail body.

Each of the S-pole magnet and the N-pole magnet may be disposed on a rail.

The electromagnet may be disposed on a guide so that the electromagnet is located between the S-pole magnet and the N-pole magnet.

The charger may further comprise a guide communication module disposed in the guide. The charger may further comprise a receiving portion in which the guide communication module is accommodated may be formed inside the guide.

The charger may further comprise a flat cable disposed between the rail body and the guide and supplying power to the electromagnet.

The charger may further comprise a ball disposed on an upper surface of the guide, and the ball may be in contact with the flat cable.

The charger may further comprise a control unit configured to turn on the electromagnet to lock the guide and turn off the electromagnet to unlock the guide.

The charger may further comprise a main body to which the charging cable is connected. A communication module may communicate with an electric vehicle being charged by the charging cable.

The main body may comprise a holster on which a coupler of the charging cable is mounted. A coupler sensor may be installed in the holster to detect the coupler.

The control unit may be configured to turn on the electromagnet or turn off the electromagnet according to signals from the coupler sensor and the communication module.

The control unit may be configured to turn off the electromagnet if the coupler sensor is off and the charging cable is disconnected to the electric vehicle.

The control unit may be configured to turn off the electromagnet if the coupler sensor is off and the charging cable is disconnected to the electric vehicle.

The control unit may be configured to turn on the electromagnet if the coupler sensor is turned on.

Another example of a charger according to this embodiment comprises a rail body on which a rail is formed; a guide disposed to slide on the rail and on which a charging cable is suspended; an electromagnet placed on one of the rail body and the guide; and a locking member moved by the electromagnet, a locking groove into which a locking member is inserted may be formed in the other of the rail body and the guide.

A locking guide through which the locking member is guided may be formed on the guide.

The charger may further comprise a control unit configured to turn on the electromagnet to lock the guide and turn off the electromagnet to unlock the guide.

### BRIEF DESCRIPTION OF THE DRAWINGS

FIG. 1 is a perspective view showing a charger when a charging cable according to this embodiment is pulled in;
FIG. 2 is a perspective view showing the charger when the charging cable according to this embodiment is pulled out;
FIG. 3 is a view showing the configuration of the main body according to this embodiment;
FIG. 4 is a view of a holster provided in the main body according to this embodiment;
FIG. 5 is a view showing a coupler holder according to this embodiment;
FIG. 6 is a bottom view showing the bottom of the rail body according to this embodiment;
FIG. 7 is a perspective view of a guide according to this embodiment;
FIG. 8 is a partially cut away perspective view showing the rail body and guide according to the present embodiment;
FIG. 9 is a partially cut away perspective view showing another example of the charger according to this embodiment;
FIG. 10 is a view when the electromagnet according to this embodiment is in locking mode; and
FIG. 11 is a view when the electromagnet according to this embodiment is in unlocked mode.

Hereinafter, detailed embodiments will be described in detail with reference to the accompanying drawings.

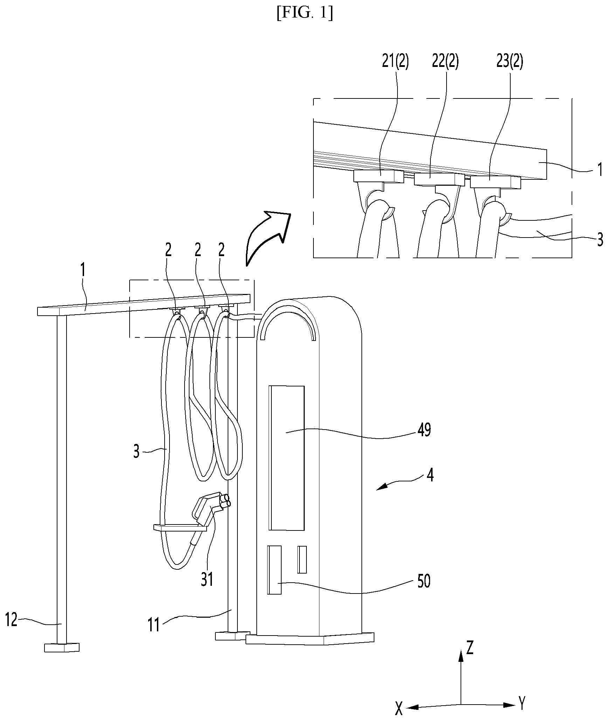

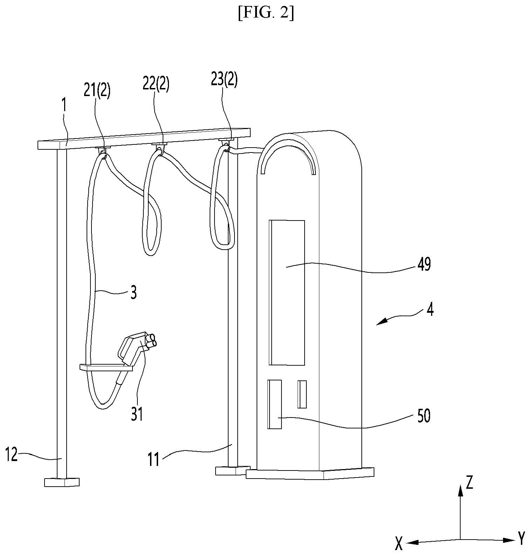

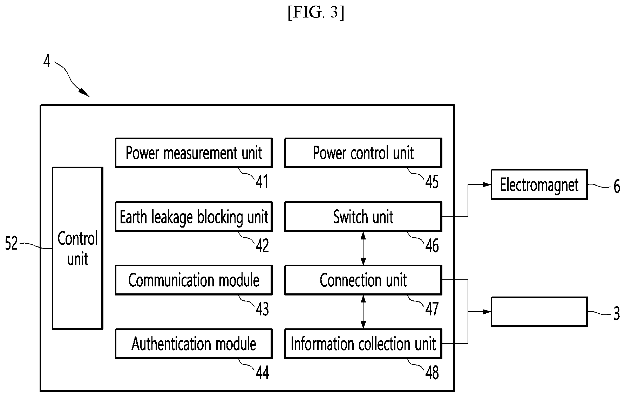

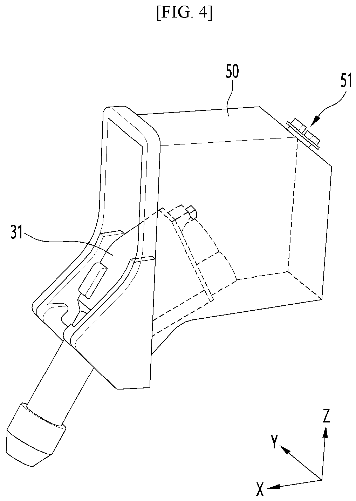

FIG. 1 is a perspective view showing a charger when a charging cable according to an embodiment is pulled in; FIG. 2 is a perspective view showing the charger when the charging cable according to an embodiment is pulled out; FIG. 3 is a view showing the configuration of the main body according to an embodiment; FIG. 4 is a view of a holster provided in the main body according to an embodiment;

The charger may be a charging station that charges an electric vehicle.

The charger may comprise a rail body 1, a plurality of guides 2, a charging cable 3, and a main body 4.

The rail body 1 may be placed on the main body 4 or placed close to the main body 4.

The rail body 1 may be placed on a pair of posts 11 and 12 spaced apart from each other. The rail body 1 may be disposed long in the front and rear direction X. In particular, the rail body may be elongated along the front and rear direction X.

A rail on which the guide 2 slides may be formed on the rail body 1.

A plurality of guides 2 can slide along the rail body 1. A plurality of guides 2 may be disposed on the rail body 1 to slide independently of each other. The plurality of guides 2 may be spaced apart from each other in the longitudinal direction X of the rail body 1.

Each of the plurality of guides 2 may be a non-magnetic material. Each of the plurality of guides 2 may be a non-conductor.

A plurality of guides 2 may be arranged in a row on the rail body 1. A plurality of guides 2 may be disposed in a row in the longitudinal direction X of the rail body 1.

The charging cable 3 may be sequentially mounted on a plurality of guides 2. The plurality of guides 2 may be disposed to be spaced apart from each other in the longitudinal direction (X) of the rail body 1.

Each of the plurality of guides 2 may comprise a same or similar component. The number of guides 2 may be 2, 3, 4, etc. For convenience of explanation, the an embodiment comprising three guides will be described below, but of course, the number of guides 2 is not limited. Meanwhile, when explaining the common configuration of the plurality of guides 2, it is referred to as guide 2, and when explaining separately, the first guide 21, the second guide 22, and the third guide 23 is referred to and explained.

The plurality of guides 2 can distribute the load for mounting the charging cable 3, and the user can pull or push the charging cable 3 with a small force. The plurality of guides 2 can move sequentially and can be changed to various positions along the rail body 1.

As shown in FIG. 1, the plurality of guides 2 may be gathered as close as possible to the post 11 that is closer to the main body 4 among the pair of posts 11 and 12 and a coupler 31 of the charging cable 3 may be close to the main body 4, and in this case, the charging cable 3 can be defined as being pulled in.

As shown in FIG. 2, the plurality of guides 2 may be spaced apart from each other so that the coupler 31 of the charging cable 3 is away from the main body 4, and in this case, the charging cable 3 can be defined as being pulled out.

The charging cable 3 may extend from the main body 4 and may be suspended on each of a plurality of guides 2. One end of the charging cable 3 may be connected to the connection portion 47 (refer to FIG. 3) of the main body 4, and a coupler 31 may be provided on the other end of the charging cable 3. An example of the coupler 31 may be a rechargeable/charging gun or connector that a user can hold.

The charger may comprise a communication module that communicates with the electric vehicle being charged by the charging cable 3. The communication module may be a Power line communication (PLC) module, or the like. A communication module may be provided in the coupler 31. The communication module placed in the coupler 31 can receive information related to charging from the electric vehicle. The communication module of the coupler 31 can communicate with the control unit 52.

The charging cable 3 can be connected to the main body 4.

The main body 4 may be a charger body, and the main body 4 may comprise a housing or case that forms the exterior of the charger.

Referring to Fig. 3, the main body 4 may comprise a power measurement unit 41, an earth leakage blocking unit 42, a communication module 43, an authentication module 44, a power control unit 45, a switch unit 46, and a connection unit 47, an information collection unit 48 may be provided.

The power measurement unit 41 may measure the power supplied to the electric vehicle through the charging cable 3.

The earth leakage blocking unit 42 may comprise a circuit that blocks earth leakage in the main body 4 or the charging cable 3.

The communication module 43 may comprise a module that communicates with a mobile terminal or server.

The authentication module 44 may authenticate the user using the charger.

The power control unit 45 may control the power of the main body 4 or the charging cable 3.

The switch unit 46 may be electrically connected to a power supply (not shown, e.g., a flat cable) provided to the guide 2, and the switch unit 46 may allow current to be applied to or blocked from the power supply provided to the guide 2. The switch unit 46 can allow current to be applied in the opposite direction.

The switch unit 46 may comprise a first switch capable of blocking the current applied to the power supply unit.

The switch unit 46 may comprise a second switch capable of switching the current applied to the power supply unit in the opposite direction.

The first switch and the second switch may also be disposed to be spaced apart from each other along the power system line. In an embodiment, one of the first switch or the second switch may be placed in the main body 4, and the other one of the first switch or the second switch may be placed in the power supply unit of the guide 2.

It is possible for the first switch and the second switch to be provided together in one switch element, and it is also possible for one switch element to apply and block current and change the direction of the current.

The charging cable 3 may be connected to the connection unit 47.

The information collection unit 48 may collect and store information on the charging cable 3.

The information of the charging cable 3 may comprise connection information of the charging cable 3, charging information, suspending information (or standby information), etc.

The connection information may be information about whether the coupler 31 of the charging cable 3 is connected to or disconnected from the electric vehicle.

The charging information may comprise information about whether the charging cable 3 is currently charging and information about a charge level/status of the battery of the electric vehicle.

The suspending information may comprise information such as whether the coupler 31 of the charging cable 3 is suspended on the holster 50 or separated from the holster 50.

A screen 49 (refer to FIGS. 1 and 2) may be disposed on the main body 4.

The user can check charging information through the screen 49 and input charging commands or payment information through the screen 49.

The main body 4 may comprise a holster 50 on which the coupler 31 of the charging cable 3 is mounted. The holster 50 may be a coupler holder or a charging gun holder.

A coupler sensor 51 that senses the coupler 31 may be installed in the holster 50. Examples of coupler sensors may be distance sensors, hall sensors, or the like and may sense the presence or absence of the coupler 31. The coupler sensor 51 is not limited to its type, and of course, any sensor capable of sensing the presence or absence of the coupler 31 may be applied.

If the coupler sensor 51 is a Hall sensor, a magnet may be installed in the coupler 31, and the coupler sensor 51 may detect a magnetic field when the coupler 31 is completely mounted on the holster 50. The coupler sensor 51 may transmit the detection result to the control unit 52. The coupler sensor 51 may transmit mounting information to the control unit 52.

When the coupler 31 is completely mounted on the holster 50, the coupler sensor 51 can transmit an on signal to the control unit 52. When the coupler 31 is separated from the holster 50, the coupler sensor 51 may transmit an off signal to the control unit 52.

The charger may further comprise a control unit 52 that controls the overall operation of the charger. The control unit 52 may be installed in the main body 4. An example of the control unit 52 may comprise a processor or microcomputer that controls the overall operation of the charger.

An outlet (not shown) through which the charging cable 3 extends outside the main body 4 may be formed on one side of the main body 4.

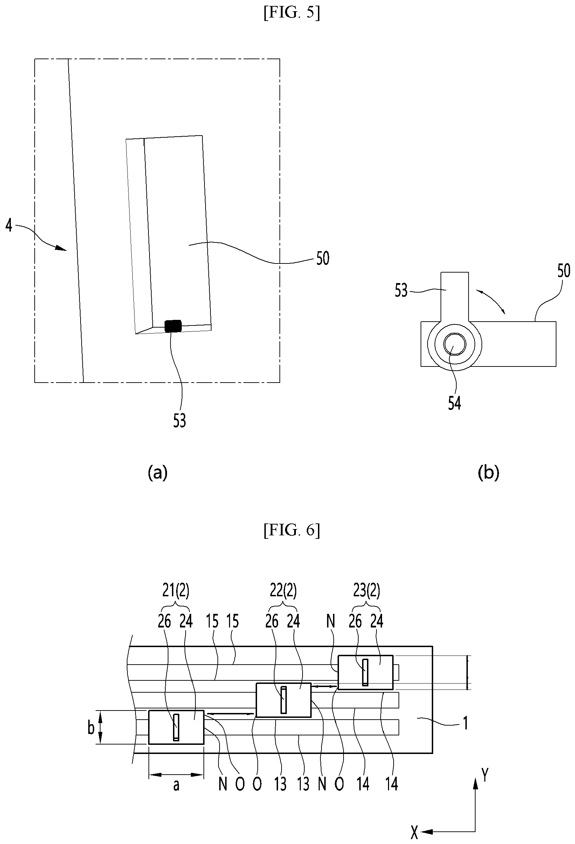

FIG. 5 is a view showing a coupler holder according to an embodiment.

The charger may comprise a coupler holder 53.

A groove that may be seated in the coupler holder 53 may be formed in the coupler 31, and when the coupler 31 is inserted into the interior of the holster 50 and seated in the coupler holder 53, accidental removal of the coupler 31 may be prevented.

FIG. 5 (a) is a view showing the coupler holder 53 disposed to protrude inside the holster 50, and FIG. 5 (b) is a view showing an example of the coupler holder being rotated.

The coupler holder 53 may be placed in the holster 50 to rotate or slide.

The charger may further comprise a driving source 54 such as a motor capable of rotating the coupler holder 53.

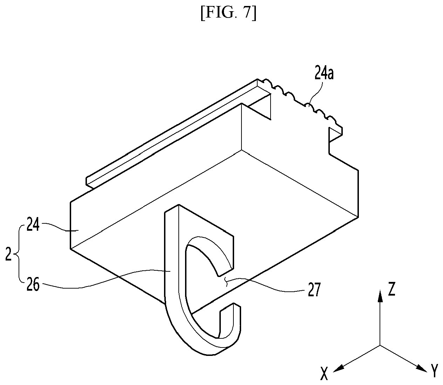

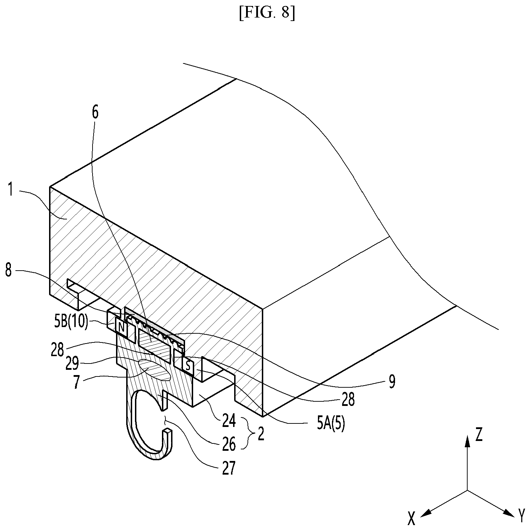

FIG. 6 is a bottom view of the rail body according to an embodiment; FIG. 7 is a perspective view of a guide according to an embodiment; and FIG. 8 is a partially cut away (cross sectional) perspective view showing the rail body and guide according to an embodiment;

The rail body 1 may comprise a beam with a space formed therein, and an opening for forming a rail may be formed in the lower plate of the beam.

The upper portion of the guide 2 can be movably accommodated in the space of the beam.

The opening of the beam may be located on the lower side of the space of the beam, and the guide 2 may be moved along the opening in the longitudinal direction of the rail body 1.

A plurality of rails 13, 14, and 15 may be formed on the rail body 1. Each of the plurality of rails 13, 14, and 15 may be formed to be long in the longitudinal direction X of the rail body 1. The plurality of rails 13, 14, and 15 may be spaced apart from each other in a direction Y perpendicular to the longitudinal direction X of the rail body 1.

The plurality of guides 2 may be disposed to slide on each of the plurality of rails 13, 14, and 15.

The plurality of rails 13, 14, and 15 may correspond 1:1 to the plurality of guides 2, and the charger may comprise a first guide 21, a second guide 22, and a third guide 23.

The plurality of rails 13, 14, and 15 may comprise a first rail 13 on which the first guide 21 is slidably guided, and a second rail 14 on which the second guide 22 is slidably guided, and a third rail 15 on which the third guide 23 is slidably guided.

The upper plate of each of the plurality of guides 2 may be seated on a rail.

Each of the plurality of guides 2 may be substantially rectangular, and the length a may be greater than the width b.

Each of the plurality of guides 2 may comprise an overlap area O and a non-overlap area N.

As shown in FIG. 6, the overlap area O may be an area that overlaps a sliding area of another adjacent guide among the guides 2 in the longitudinal direction X of the guide 2. The overlap area O may align with another adjacent guide in the longitudinal direction X of the guide 2.

The overlap area O of the first guide 21 overlaps the second guide 22 in the longitudinal direction X of the first guide 21 and may align with the second guide 22 in the longitudinal direction X of the first guide 21.

The overlap area O of the second guide 22 overlaps the third guide 23 in the longitudinal direction X of the second guide 22 and may align with the third guide 23 in the longitudinal direction X of the second guide 22.

As shown in FIG. 6, the non-overlap area N may be an area that does not overlap with another adjacent guide in the longitudinal direction X of the guide.

The non-overlap area N of the first guide 21 may not overlap the second guide 22 in the longitudinal direction X of the first guide 21.

The non-overlap area N of the second guide 22 may not overlap the third guide 23 in the longitudinal direction X of the second guide 22.

The first guide 21 may comprise a non-overlap area N and an overlap area O.

The second guide 23 may comprise a pair of overlap areas O and a non-overlap area N located between the pair of overlap areas O. One of the pair of overlap areas O may overlap the overlap area O of the first guide 21, and the other of the pair of overlap areas O may overlap the overlap area O of the third guide 23.

The third guide 23 may comprise an overlap area O and a non-overlap area N.

If each of the plurality of guides 2 comprises an overlap area O and a non-overlap area N, the plurality of guides 2 can move sequentially in the order disposed on the rail body 1, and the entanglement of the charging cable 3 can be minimized.

The charger may comprise a magnet 5 and an electromagnet 6.

The electromagnet 6 may be placed on one of the guide 2 and the rail body 1, and the magnet 5 may be placed on the other one of the guide 2 and the rail body 1.

If the magnet 5 is placed on the rail body 1, the electromagnet 6 may be placed on the guide 2. Conversely, when the magnet 5 is placed on the guide 1, the electromagnet 6 may be placed on the rail body 1.

If the electromagnet 6 is placed on the guide 2, the electromagnet 6 is preferably placed on each of a plurality of guides 2, and if the magnet 5 is placed on the guide 2, the magnet 5 is preferably disposed on each of the plurality of guides (2).

If the electromagnet 6 is disposed on each of the plurality of guides 2, the charger can independently lock each of the plurality of guides 2. It is preferable that the charger locks each of the plurality of guides 2 independently.

Hereinafter, an example in which the magnet 5 is disposed on the rail body 1 and the electromagnet 6 is disposed on each of the plurality of guides 2 will be described in detail.

A plurality of magnets 5 may be disposed on the rail body 1. The plurality of magnets 5 may comprise an S-pole magnet 5A and an N-pole magnet 5B.

The S-pole magnet 5A and N-pole magnet 5B)may be placed on the rail body 1.

The S-pole magnet 5A and the N-pole magnet 5B may be spaced apart in a direction Y perpendicular to the longitudinal direction X of the rail body 1.

Each of the S-pole magnet 5A and N-pole magnet 5B may be placed on the rail of the rail body 1. The S-pole magnet 5A and the N-pole magnet 5B may be disposed to be spaced apart from each other. An opening of the beam is located between the S-pole magnet 5A and the N-pole magnet 5B.

Each of the S-pole magnet 5A and the N-pole magnet 5B may be disposed on the rail body 1 in the longitudinal direction X of the rail body 1. Each of the S-pole magnets 5A and N-pole magnets 5B may be disposed from one end of the rail to the other end of the rail in the longitudinal direction of the rail.

The length of each of the S-pole magnet 5A and the N-pole magnet 5B may be longer than the length of the electromagnet 6.

In an embodiment in which the charger comprises three guides 2 and three electromagnets 6, the length of each of the S-pole magnets 5A and N-pole magnets 5B may be longer than the sum of the lengths of the three electromagnets 6.

Each of the S-pole magnet 5A and N-pole magnet 5B can act with three electromagnets 6. Each of the S-pole magnet 5A and N-pole magnet 5B may be a common magnet that acts with the three electromagnets 6.

The electromagnet 6 may be disposed on each of the plurality of guides 2. An electromagnet receiving portion 28 in which the electromagnet 6 is accommodated may be formed inside the guide 2.

The electromagnet receiving portion 28 may be formed in a portion of the guide 2 located in the opening of the beam. The electromagnet receiving portion 28 may be formed in a portion of the guide 2 to be located in a space corresponding to the opening of the guide 2. The electromagnet 6 is disposed in the guide 2 between the S-pole magnet 5A and the N-pole magnet 5B. The electromagnet 6 may be positioned at the same height as the S-pole magnet 5A and the N-pole magnet 5B.

The control unit 52 may control a plurality of electromagnets 6. The control unit 52 may independently control the plurality of electromagnets 6 and independently lock/unlock the plurality of guides 2. The control unit 52 may control the switch unit 47 (see FIG. 3). The control unit 52 may output a control signal to the switch unit 47 (see FIG. 3) to turn on the electromagnet 6 or turn off the electromagnet 6.

The control unit 52 may control the electromagnet 6 to be in a locking mode. The control unit 52 may control the electromagnet 6 to be turned on in the locking mode. The control unit 52 may lock the guide 2 by turning on the electromagnet 6.

The locking mode is preferably performed when the charging cable 3 is no longer needed to be moved (for example, while charging an electric vehicle or the charging cable 3 is in a standby state, etc.), and the control unit 52 may lock the guide 2 in a specific position and inconvenience that may occur when the charging cable 3 is randomly moved can be minimized.

The control unit 52 may control the electromagnet 6 to be in an unlocked mode. The control unit 52 may control the electromagnet 6 to be turned off in the unlocked mode. The control unit 52 can turn off the electromagnet 6 to unlock the guide 2.

The unlocking mode is used in situations where pulling out or pulling in the charging cable 3 is necessary, for example, pulling out the charging cable 3 to charge an electric vehicle or pulling in the charging cable 3 on the main body 4, etc. The control unit 52 may unlock one or more of the guides 2 at a specific position, so that the charging cable 3 can be pulled out or pulled in.

The control unit 52 may turn on the electromagnet 6 or turn off the electromagnet 6 according to signals from the coupler sensor 51 and the communication module of the coupler 31. The control unit 52 may turn on the electromagnet 6 or turn off the electromagnet 6 according to a signal from the authentication module 44.

The control unit 52 may turn off the electromagnet 6 when the user of the electric vehicle completes charging. That is, when the user completes the payment for charging, locking of the guide 2 may be released and the guide 2 can be moved.

When the guide 2 is unlocked, the user can pull the charging cable 3, the guide 2 can be moved along the rail body 1, and the coupler 31 can be connected to the electric vehicle.

The control unit 52 may turn on the electromagnet 6 when the coupler sensor 51 is off and the charging cable 3 is connected to the electric vehicle. That is, when the electric vehicle is charging, the guide 2 may be locked so that it cannot be moved.

When charging of the electric vehicle is complete, the coupler 31 may transmit a charging completion signal, and the control unit 52 may turn off the electromagnet 6. That is, when charging of the electric vehicle is completed, the locking of the guide 2 is released and the guide 2 can be moved. The control unit 52 may turn off the electromagnet 6 when the coupler sensor 51 is off and the charging cable 3 and the electric vehicle are not connected.

The control unit 52 may turn on the electromagnet 6 when the coupler sensor 51 is turned on. That is, when the coupler 31 is returned to the holster 50 after charging the electric vehicle, the guide 2 can be locked and fixed in position.

The guide 2 may comprise a base 24 and a supporter 26.

The base 24 may be guided along the rail body 2 in the longitudinal direction X of the rail body 2, and the guide 2 may be a linear moving guide.

If the charging cable 3 is suspended on the supporter 26, the supporter 26 may support the suspended portion of the charging cable 3.

The supporter 26 may protrude downward from the bottom of the base 24. The supporter 26 may have a ring shape, as shown in FIG. 7. The supporter 26 may have an opening 27 through which the charging cable 3 can pass. That is, the supported 26 may have an open ring shape or C shape. The opening 27 may be opened in a horizontal direction on either the left or right side of the supporter 26. The opening 27 may be opened in the left and right direction Y on either the left or right side of the supporter 26. The charging cable 3 can be inserted through the opening 27 at the side of the supporter 26 and suspended in the supporter 26.

The opening directions of the openings 27 of the supporters 26 of the plurality of guides 2 may be alternately opposite to each other.

If the opening 27 formed in the supporter 26 of the first guide 21 is formed on the left side of the supporter 26, the opening 27 formed in the supporter 26 of the second guide 22 may be formed on the right side of the supporter 26, and the opening 27 formed on the supporter 26 of the third guide 23 may be formed on the left side of the supporter 26.

Conversely, if the opening 27 formed in the supporter 26 of the first guide 21 is formed on the right side of the supporter 26, the opening 27 formed in the supporter 26 of the second guide 22 may be formed on the left side of the supporter 26, and the opening 27 formed in the supporter 26 of the third guide 23 may be formed on the right side of the supporter 26.

If the opening 27 formed in the supporter 26 of a guide 2 is opened in the opposite direction with respect to a direction of opening 27 in an adjacent guide 2 (i.e., alternately), the charging cable 3 can be reliably mounted on the plurality of guides 2.

The supporters 26 of the plurality of guides 2 may be parallel to each other.

The overlap area O may correspond to an area of the base 24, and the area of the supporters 26 of the plurality of guides 2 may not overlap. In this case, entanglement of the charging cable 3 can be minimized.

The charger may comprise a guide communication module 7 disposed on the guide 2. A communication module receiving portion 29 in which the guide communication module 7 is accommodated may be formed inside the guide 2.

Examples of the communication module 7 may be a Bluetooth (BT) communication module, an ultra-wideband (UWB) communication module, etc.

A user or an administrator may communicate with the guide communication module 7 through a mobile terminal external to the charger, and the guide communication module 7 may receive signals and other data from the mobile terminal, etc.

The guide communication module 7 may communicate with the communication module provided in the coupler 31, and the electromagnet 6 provided in the guide 2 can be turned on or off according to the command received by the guide communication module 7.

The charger may further comprise a flat cable 8. The flat cable 8 may supply power to the electromagnet 6. The flat cable 8 may be elongated along the longitudinal direction X of the rail body 1. The flat cable 8 may be strip-shaped or plate-shaped. The flat cable 8 can be accommodated in the space of the beam.

The flat cable 8 may be placed between the rail body 1 and the guide 2. The flat cable 8 may be placed on the upper surface of the guide 2. The flat cable 8 may extend horizontally, particularly in the front and rear direction.

The flat cable 8 can apply current to the electromagnet 6 of the guide 2 in a state its position is fixed to the rail body 1.

The charger may further comprise bearings, e.g., balls 9.

The ball 9 may be placed on the upper surface of the guide 2. The ball 9 can be brought into contact with the flat cable 8. A ball receiving portion 24a in which a portion of the ball 9 is accommodated may be formed on the upper surface of the guide 2. The ball 9 can roll when the guide 2 moves.

A plurality of balls 9 may be placed in the charger, and the guide 2 may slide smoothly on the rail body 1 via the balls 9.

An example of the guide 2 may be provided with an electrical contact point electrically connected to the electromagnet 6, and the electrical contact point may be in contact with the flat cable 8. Even if the guide 2 slides along the rail body 1, the electrical contact point may remain in contact with the flat cable 8 and apply a current to the electromagnet 6.

Another example of the guide 2 may comprise a wire electrically connected to the electromagnet 6, and the wire may be connected to the flat cable 8. Even if the guide 2 slides along the rail body 1, the wire can remain connected to the flat cable 8, and current can be applied to the electromagnet 6.

The other example of the guide 2 may comprise a ball 9 electrically connected to the electromagnet 6, and the ball 9 may be in contact with the flat cable 8. Even if the guide 2 slides along the rail body 1, the ball 9 can remain in contact with the flat cable 8 and apply a current to the electromagnet 6.

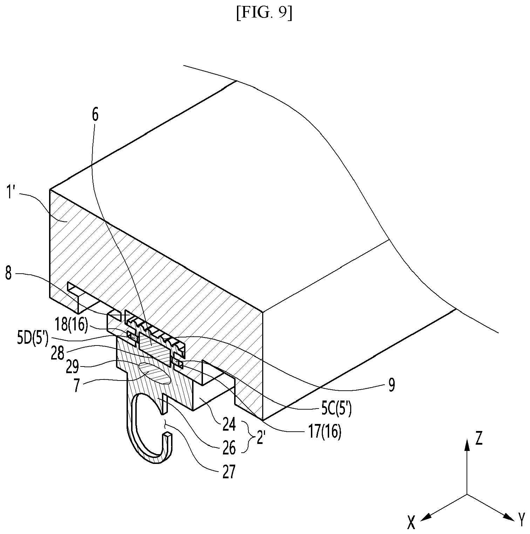

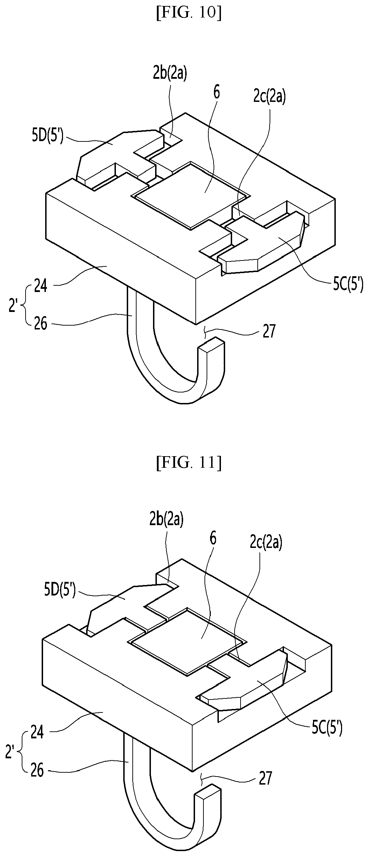

FIG. 9 is a partially cut away perspective view showing another example of the charger according to an embodiment; FIG. 10 is a view when the electromagnet according to an embodiment is in a locked mode; and FIG. 11 is a view when the electromagnet according to an embodiment is in an unlocked mode.

The charger shown in FIG. 9 comprises a rail body 1', a guide 2', a locking member 5', and an electromagnet 6.

A rail may be formed on the rail body 1'.

If the electromagnet 6 is placed on one of the rail body 1' and the guide 2', a locking groove 16 into which a locking member 5' is inserted may be formed on the other one of the rail body 1' and the guide 2.

The locking groove 16 may be formed on the rails 13, 14, and 15 of the rail body 1'.

The locking groove 16 may be formed in an area facing the opening of the beam. A plurality of locking grooves 16 may be provided. The plurality of locking grooves 16 may be spaced apart in the longitudinal direction X of the rail body 1. The plurality of locking grooves 16 may be spaced apart in a direction Y perpendicular to the longitudinal direction X of the rail body 1'.

The plurality of locking grooves 16 may comprise a left groove 17 and a right groove 18.

A plurality of left grooves 17 and right grooves 18 may each be provided, a plurality of left grooves 17 may be spaced apart in the longitudinal direction X of the rail body 1, and a plurality of right grooves may be spaced apart in the longitudinal direction X of the rail body 1.

The rail body 1' may be identical or similar in configuration and operation as the rail body 1 of the charger shown in FIG. 8 apart from the locking groove 16, and other configurations may be the same or similar. To avoid redundant description, the same reference numbers are used and detailed explanations thereof may thus be omitted.

The guide 2' can be disposed to slide on the rail, and the charging cable 3 can be suspended on the guide 2'.

The guide 2' may receive the locking member 5', and a locking guide 2a may be formed to guide the movement of the locking member 5'. The locking member 5' can be inserted into and accommodated in the locking guide 2a, and the locking guide 2a can guide the movement of the locking member 5'. A plurality of locking guides 2a may be provided on the locking member 5'. A plurality of locking guides 2a may be spaced apart in the width direction of the guide 2'. The plurality of locking guides 2a may comprise a left locking guide 2b and a right locking guide 2c.

The guide 2' may be identical or similar in configuration and operation to the guide 2 of the charger shown in FIG. 8, apart from the locking guide 2a. The same or similar elements are given the same reference numbers. In order to avoid duplicate description, a detailed explanation thereof is omitted.

The locking member 5' can be moved by the electromagnet 6. An example of a locking member 5' may be a magnet. However, the locking member 5' is not limited to a magnet as long as it can be moved by the electromagnet 6.

The locking member 5' may be advanced and retreated (moved back and forth) in a direction Y perpendicular to the longitudinal direction X of the rail body 1 by the electromagnet 6. The locking member 5' may be disposed to be guided by the locking guide 2a. A plurality of locking members 5' may be provided. The plurality of locking members 5' may be spaced apart in the width direction of the guide 2'.

The plurality of locking members 5' may comprise a left locking member 5C and a right locking member 5D. The left locking member 5C can slide along the left locking guide 2b. The right locking member 5D can slide along the right locking guide 2c.

The electromagnet 6 may be placed on either the rail body 1 or the guide 2, and an example in which the electromagnet 6 is placed on the guide 2 will be described below.

The electromagnet 6 may be the same or similar to the electromagnet 6 of the charger shown in FIG. 8, and for other components, the same reference numbers are used. To avoid duplicate description, detailed descriptions thereof are omitted.

When current flows in one direction in the electromagnet 6, the electromagnet 6 can push the left locking member 5C and the right locking member 5D by a repelling magnetic force, as shown in FIG. 9. A portion of the left locking member 5C may be inserted into the left locking groove 17, and movement of the left locking member 5C may be locked in the longitudinal direction X of the rail body 1'. A portion of the right locking member 5D may be inserted into the right locking groove 18, and movement of the right locking member 5D may be locked in the longitudinal direction X of the rail body 1'.

When current flows in the electromagnet 6 in the opposite direction, the electromagnet 6 can pull the left locking member 5C and the right locking member 5D by an attracting magnetic force, as shown in FIG. 10.

The left locking member 5C can be inserted/retracted into the left locking guide 2b, an entire of the left locking member 5C may be pulled/attracted out of the left locking groove 17, and the left locking member 5C may be released from the rail body 1'.

The right locking member 5D may be inserted/retracted into the right locking guide 2c, an entire of the right locking member 5D may be pulled/attracted out of the right locking groove 18, and the right locking member 5D may be released from the rail body 1'.

According to an embodiment, the guide can be locked or unlocked by the electromagnet and magnet, thereby limiting movement of the guide.

In addition, wear and damage to the charging cable can be minimized, and inconvenience that may occur when the guide and charging cable are unintendedly moved can be minimized.

In addition, the guide can be locked using a simple structure of electromagnets and magnets.

In addition, each of the plurality of guides comprises an overlap area, the order of the plurality of guides does not change, and twisting of the charging cable can be minimized.

In addition, since the supporter of the guide does not overlap with the supporter of an adjacent guide, twisting of the charging cable can be minimized.

In addition, when the electric vehicle is charging or the coupler is on standby, the guide is locked, thereby minimizing a risk of accidents caused by the guide or charging cable being moved.

In addition, the guide is unlocked while the cable is being pulled out or pulled in, so the guide can move smoothly and the cable can be pulled out or pulled in normally.

The above description is merely an example of the technical idea of the present invention, and various modifications and variations can be made to those skilled in the art without departing from the essential characteristics of the present invention.

Therefore, embodiments disclosed in the present disclosure are not intended to limit the technical idea of the present invention, but to explain, and the scope of the technical idea of the present invention is not limited by these embodiments.

The protection scope of the present invention should be construed according to the claims below, and all technical ideas within the equivalent range should be construed as being comprised in the scope of the present invention.

## Claims

1. A charger comprising;
a rail body (1) on which a rail (13, 14, 15) is formed;
a guide (2) disposed to slide on the rail (13, 14, 15) and on which a charging cable (3) is suspended;
an electromagnet (6) placed on one of the rail body (1) and the guide (2); and
a magnet (5) placed on the other one of the rail body (1) and the guide (2).

2. The charger according to claim 1,
wherein a plurality of rails (13, 14, 15) is formed on the rail body (1), a plurality of guides (2) is disposed to slide on each of a plurality of rails (13, 14, 15), and an electromagnet (6) is disposed on each of the plurality of guides (2).

3. The charger according to claim 2, wherein each of the plurality of guides (2) comprises:
an overlap area (O) that overlaps another adjacent guide (2) in the longitudinal direction of the guide (2); and
a non-overlap area (N) that does not overlap another adjacent guide (2) in the longitudinal direction of the guide (2).

4. The charger according to any one of claims 1 to 3,
wherein the guide (2) comprises;
a base (24); and
a supporter (26) formed on a bottom of the base (24) and on which the charging cable (3) is suspended.

5. The charger according to claim 4,
wherein the overlap area (O) is formed on the base (24), and supporters (26) of the plurality of guides (2) do not overlap each other.

6. The charger according any one of claims 1 to 5, wherein the magnet (5) comprises an S-pole magnet (5A) and an N-pole magnet (5B), wherein the S-pole magnet (5A) and the N-pole magnet (5B) are spaced apart from each other on the rail body (1) in a direction perpendicular to the longitudinal direction of the rail body (1).

7. The charger according to claim 6,
wherein each of the S-pole magnet (5A) and the N-pole magnet (5B) are disposed on a rail (13, 14, 15),
wherein the electromagnet (6) is disposed on a guide (2) so that the electromagnet (6) is located between the S-pole magnet (5A) and the N-pole magnet (5B).

8. The charger according to any one of claims 1 to 7, further comprising:
a guide communication module (7) disposed in the guide (2),
wherein a communication module receiving portion (29) in which the guide communication module (7) is accommodated is formed inside the guide (2).

9. The charger according to any one of claims 1 to 8, further comprising;
a flat cable (8) disposed between the rail body (1) and the guide (2) and supplying power to the electromagnets (6).

10. The charger according to claim 9, further comprising;
a ball (9) disposed on an upper surface of the guide (2),
wherein the ball (9) is in contact with the flat cable (8).

11. The charger according to any one of claims 1 to 10, further comprising;
a control unit (52) configured to turn on the electromagnet (6) to lock the guide (2) and turn off the electromagnet (6) to unlock the guide (2).

12. The charger according to claim 11, further comprising;
a main body (4) to which the charging cable (3) is connected, and
a communication module (7) communicating with an electric vehicle being charged by the charging cable (3),
wherein the main body (4) comprises:
a holster on which a coupler of the charging cable (3) is mounted; and
a coupler sensor installed in the holster to detect the coupler,
wherein the control unit (52) is configured to turn on the electromagnet (6) or turn off the electromagnet (6) according to signals from the coupler sensor and the communication module (7).

13. The charger according to claim 12,
wherein the control unit (52) is configured to turn off the electromagnet (6) if the coupler sensor is off and the charging cable (3) is disconnected to the electric vehicle.

14. The charger according to claim 12 or 13,
wherein the control unit (52) is configured to turn on the electromagnet (6) if the coupler sensor is off and the charging cable (3) is connected to the electric vehicle.

15. The charger according to any one of claims 12 to 14,
wherein the control unit (52) is configured to turn on the electromagnet (6) if the coupler sensor is turned on.

## Amended claims

### Amended claims in accordance with Rule 137(2) EPC.

1. A charger comprising;
a rail body (1) on which a rail (13, 14, 15) is formed;
a guide (2) disposed to slide on the rail (13, 14, 15) and on which a charging cable (3) is suspended;
an electromagnet (6) placed on one of the rail body (1) and the guide (2);
a magnet (5) placed on the other one of the rail body (1) and the guide (2); and
a control unit (52) configured to turn on the electromagnet (6) to lock the guide (2) and turn off the electromagnet (6) to unlock the guide (2),
wherein the electromagnet (6) and the magnet (5) are locking members for locking the guide (2) in position along the rail,
wherein the magnet (5) comprises an S-pole magnet (5A) and an N-pole magnet (5B), wherein the S-pole magnet (5A) and the N-pole magnet (5B) are spaced apart from each other on the rail body (1) in a direction (Y) perpendicular to a longitudinal direction (X) of the rail body (1),
wherein each of the S-pole magnet (5A) and the N-pole magnet (5B) are disposed on the rail (13, 14, 15),
wherein the electromagnet (6) is disposed on a guide (2) so that the electromagnet (6) is located between the S-pole magnet (5A) and the N-pole magnet (5B).

2. The charger according to claim 1,
wherein a plurality of rails (13, 14, 15) is formed on the rail body (1), a plurality of guides (2) is disposed to slide on each of a plurality of rails (13, 14, 15), and an electromagnet (6) is disposed on each of the plurality of guides (2), and
wherein the guide is provided for each rail.

3. The charger according to claim 2,
wherein each of the plurality of guides (2) comprises:
an overlap area (O) that overlaps another adjacent guide (2) in the longitudinal direction (X) of the guide (2); and
a non-overlap area (N) that does not overlap another adjacent guide (2) in the longitudinal direction (X) of the guide (2).

4. The charger according to claim 3,
wherein the guide (2) comprises;
a base (24); and
a supporter (26) formed on a bottom of the base (24) and on which the charging cable (3) is suspended.

5. The charger according to claim 4,
wherein the overlap area (O) is formed on the base (24), and supporters (26) of the plurality of guides (2) do not overlap each other.

6. The charger according to any one of claims 1 to 5, further comprising:
a guide communication module (7) disposed in the guide (2),
wherein a communication module receiving portion (29) in which the guide communication module (7) is accommodated is formed inside the guide (2).

7. The charger according to any one of claims 1 to 6, further comprising;
a flat cable (8) disposed between the rail body (1) and the guide (2) and supplying power to the electromagnets (6); and
a ball (9) disposed on an upper surface of the guide (2),
wherein the ball (9) is in contact with the flat cable (8).

8. The charger according to claim 1, further comprising;
a main body (4) to which the charging cable (3) is connected, and
a guide communication module (7) communicating with an electric vehicle being charged by the charging cable (3),
wherein the main body (4) comprises:
a holster on which a coupler of the charging cable (3) is mounted; and
a coupler sensor installed in the holster to detect the coupler,
wherein the control unit (52) is configured to turn on the electromagnet (6) or turn off the electromagnet (6) according to signals from the coupler sensor and the guide communication module (7).

9. The charger according to claim 12,
wherein the control unit (52) is configured to turn off the electromagnet (6) if the coupler sensor is off and the charging cable (3) is disconnected to the electric vehicle.

10. The charger according to claim 12 or 13,
wherein the control unit (52) is configured to turn on the electromagnet (6) if the coupler sensor is off and the charging cable (3) is connected to the electric vehicle.

11. The charger according to any one of claims 12 to 14,
wherein the control unit (52) is configured to turn on the electromagnet (6) if the coupler sensor is turned on.
